# EUROPEAN PATENT APPLICATION

(11) **EP 4 811 093 A1**
(43) Date of publication of application: **23.09.2026**
(21) Application number: 24890688.5
(22) Date of filing: 13.11.2024
(51) Int. Cl.: G06F 3/0482

(54) **MEDIA CONTENT GENERATION METHOD, MEDIA CONTENT DISPLAY METHOD, AND RELATED DEVICE**

(30) Priority: 17.11.2023 CN 202311542706
(71) Applicant: Beijing Zitiao Network Technology Co., Ltd., Beijing 100190 (CN)
(72) Inventor: YANG, Jiahui, Beijing 100028 (CN); LI, Xinyi, Beijing 100028 (CN)
(74) Representative: Grünecker Patent- und Rechtsanwälte PartG mbB
(86) International application number: PCT/CN2024/131668
(87) International publication number: WO 2025/103333

(57) **Abstract**

The present disclosure relates to a media content generation method, a display method, and related devices, and belongs to the field of terminal technology. The media content generation method includes: displaying an acquisition interface in response to receiving a creation operation of media content, where the acquisition interface is configured for acquiring at least one target image resource; displaying one or more image resources and target controls on the acquisition interface, where the target controls include a first control and a second control; switching the acquisition interface to a media content generation interface corresponding to a target control in response to a trigger operation on the target control, where the media content generation interface includes a text editing interface and an image editing interface, the first control corresponds to the text editing interface, and the second control corresponds to the image editing interface; and generating target media content corresponding to the target control in response to a trigger operation on the media content generation interface.

## Description

### CROSS-REFERENCE TO RELATED APPLICATION(S)

The present application is based on and claims priority of China Application No. 202311542706.6, filed on November 17, 2023, the disclosure of which is hereby incorporated by reference in its entirety.

### TECHNICAL FIELD

The present disclosure relates to the field of terminal technology, and in particular, to a media content generation method, a display method, and a related device.

### BACKGROUND

In related art, a user may post multimedia content, for example, content including a video, a picture, or text, through a multimedia application installed on an electronic device. Some multimedia applications support users to post multiple types of multimedia content.

### SUMMARY

The part of the summary is provided so as to introduce the concepts in a brief form, and these concepts will be described in detail later in the part of detailed description. The part of the summary is not intended to identify key features or necessary features of the claimed technical solution, nor is intended to be used to limit the scope of the claimed technical solution required.

According to some embodiments of the present disclosure, a media content generation method is provided, which includes: displaying an acquisition interface in response to receiving a creation operation of media content, where the acquisition interface is configured for acquiring at least one target image resource; displaying one or more image resources and target controls on the acquisition interface, where the target controls include a first control and a second control; switching the acquisition interface to a media content generation interface corresponding to a target control in response to a trigger operation on the target control, where the media content generation interface includes a text editing interface and an image editing interface, the first control corresponds to the text editing interface, and the second control corresponds to the image editing interface; and generating target media content corresponding to the target control in response to a trigger operation on the media content generation interface.

According to some embodiments of the present disclosure, a media content display method is provided, which includes: displaying target media content in a media content display interface, where the target media content is generated by the media content generation method according to any embodiment of the present disclosure, the target media content includes first-type content and second-type content, and the first-type content and the second-type content use different playing modes when being displayed.

According to some embodiments of the present disclosure, a media content generation apparatus is provided, which includes: a first display module, which is configured to display an acquisition interface in response to receiving a creation operation of media content, where the acquisition interface is configured for acquiring at least one target image resource; a second display module, which is configured to display one or more image resources and target controls on the acquisition interface, where the target controls include a first control and a second control; a first switching module, which is configured to switch the acquisition interface to a media content generation interface corresponding to a target control in response to a trigger operation on the target control, where the media content generation interface includes a text editing interface and an image editing interface, the first control corresponds to the text editing interface, and the second control corresponds to the image editing interface; and a generation module, which is configured to generate target media content corresponding to the target control in response to a trigger operation on the media content generation interface.

According to some embodiments of the present disclosure, an electronic device is provided, which includes: a memory; and a processor coupled to the memory, where the processor is configured to, based on instructions stored in the memory, execute the method according to any embodiment of the present disclosure.

According to some embodiments of the present disclosure, a computer-readable storage medium is provided, a computer program is stored on the computer-readable storage medium, and when the program is executed by a processor, the method according to any embodiment of the present disclosure is executed.

According to some embodiments of the present disclosure, a computer program is provided, which includes: instructions that, when executed by a processor, cause the processor to execute the method according to any embodiment of the present disclosure.

Other features, aspects and advantages of the present disclosure will become clear through the following detailed description of the exemplary embodiments of the present disclosure with reference to the drawings.

### BRIEF DESCRIPTION OF THE DRAWINGS

Preferred embodiments of the present disclosure are described hereinafter with reference to the drawings. The drawings described herein are used to provide a further understanding of the present disclosure, and together with the following specific description, are incorporated in and constitute a part of this specification for explaining the present disclosure. It should be understood that the drawings in the following description merely relate to some embodiments of the present disclosure, and do not constitute a limitation to the present disclosure. In the drawings:
Fig. 1 shows a schematic flowchart of a posting method according to some embodiments of the present disclosure;
Fig. 2 shows a schematic diagram of an acquisition interface according to some embodiments of the present disclosure;
Fig. 3A shows a schematic diagram of a first posting interface according to some embodiments of the present disclosure;
Fig. 3B shows a schematic diagram of a second image editing interface according to some embodiments of the present disclosure;
Fig. 3C shows a schematic diagram of a text editing detail interface according to some embodiments of the present disclosure;
Fig. 4A shows a schematic diagram of a first image editing interface according to some embodiments of the present disclosure;
Fig. 4B shows a schematic diagram of a video editing interface according to some embodiments of the present disclosure;
Fig. 4C shows a schematic diagram of a video posting interface according to some embodiments of the present disclosure;
Fig. 4D shows a schematic diagram of a posting interface of picture-text content according to some embodiments of the present disclosure;
Fig. 5A shows a schematic diagram of a media content display interface of first-type content according to some embodiments of the present disclosure;
Fig. 5B shows a schematic diagram of a media content display interface of picture-text content according to some embodiments of the present disclosure;
Fig. 5C shows a schematic diagram of a media content display interface of a video according to some embodiments of the present disclosure;
Fig. 6 shows a schematic structural diagram of a media content generation apparatus according to some embodiments of the present disclosure;
Fig. 7 shows a schematic structural diagram of a media content posting system according to some embodiments of the present disclosure;
Fig. 8 shows a schematic structural diagram of an electronic device according to some embodiments of the present disclosure;
Fig. 9 shows a schematic structural diagram of a computer system according to some embodiments of the present disclosure;

It should be understood that, for ease of description, the sizes of various parts shown in the drawings are not necessarily drawn according to actual proportional relationships. The same or similar reference numerals are used in the drawings to represent the same or similar components. Therefore, once an item is defined in one drawing, it may not be further discussed in subsequent drawings.

### DETAILED DESCRIPTION OF EMBODIMENTS

The technical solutions in the embodiments of the present disclosure will be described clearly and completely with reference to the drawings in the embodiments of the present disclosure, but it is obvious that the described embodiments are only a part of the embodiments of the present disclosure, rather than all of them. The following description of the embodiments is actually only illustrative, and in no way serves as any limitation to the present disclosure and its application or use. It should be understood that the present disclosure may be implemented in various forms, and should not be construed as limited to the embodiments set forth herein.

It should be understood that steps described in method implementations of the present disclosure may be executed in different orders and/or in parallel. In addition, the method implementations may include additional steps and/or omit execution of the steps shown. The scope of the present disclosure is not limited in this regard. Unless otherwise specifically stated, relative arrangements, numerical expressions and values of components and steps set forth in these embodiments should be construed as merely exemplary, and do not limit the scope of the present disclosure.

The term "include/comprise" and its variants used in the present disclosure mean open terms that at least include the following elements/features, but do not exclude other elements/features, that is, "include/comprise but not limited to". In addition, the term "contain" and its variants used in the present disclosure mean open terms that at least contain the following elements/features, but do not exclude other elements/features, that is, "contain but not limited to". Therefore, include/comprise is synonymous with contain.

The terms "one embodiment", "some embodiments" or "the embodiment" in the whole specification mean that a specific feature, structure or characteristic described in combination with the embodiment is included in at least one embodiment of the present disclosure. For example, the term "one embodiment" means "at least one embodiment"; the term "another embodiment" means "at least one other embodiment"; the term "some embodiments" means "at least some embodiments". Moreover, the appearances of the phrase "in one embodiment", "in some embodiments" or "in the embodiment" in various places in the whole specification do not necessarily all refer to the same embodiment, but may also refer to the same embodiment.

It should be noted that concepts such as "first" and "second" mentioned in the present disclosure are only used to distinguish different apparatuses, modules or units, and are not used to limit an order or interdependence of functions performed by these apparatuses, modules or units. Unless otherwise specified, concepts such as "first" and "second" are not intended to imply that objects described as such must be in a given order in terms of time, space, ranking or in any other way.

It should be noted that modifications of "one" and "multiple" mentioned in the present disclosure are illustrative rather than restrictive, and those skilled in the art should understand that, unless otherwise clearly indicated in the context, they should be understood as "one or more".

The names of messages or information interacted between multiple apparatuses in the implementations of the present disclosure are only used for illustrative purposes, and are not used to limit the scope of these messages or information.

The embodiments of the present disclosure are described in detail below with reference to the drawings, but the present disclosure is not limited to these specific embodiments. The following specific embodiments may be combined with each other, and the same or similar concepts or processes may not be repeated in certain embodiments. In addition, in one or more embodiments, a specific feature, structure or characteristic may be combined in any suitable way that will be clear to those of ordinary skill in the art from the present disclosure.

It should be understood that the present disclosure also does not limit how to acquire the image to be applied/processed. In an embodiment of the present disclosure, the image may be acquired from a storage apparatus, such as an internal memory or an external storage apparatus. In another embodiment of the present disclosure, a photographing component may be mobilized to take a picture. It should be noted that the acquired image may be a piece of acquired image, or may be a frame of image in an acquired video, which is not particularly limited thereto.

In the context of the present disclosure, the image may refer to any of various images, such as a color image, a grayscale image, and the like. It should be pointed out that in the context of this specification, the type of the image is not specifically limited. In addition, the image may be any appropriate image, for example, an original image obtained by a photographing apparatus, or an image that has been subjected to specific processing on the original image, such as preliminary filtering, anti-aliasing, color adjustment, contrast adjustment, normalization, and the like. It should be pointed out that the pre-processing operation may also include other types of pre-processing operations known in the art, which will not be described in detail here.

After analysis, it is found that in related art, after the user determines the image resource related to the posted content, the display of the editing interface of the image resource is triggered. However, with the emergence of multiple types of multimedia content, information carried by different types of multimedia content focuses on different aspects. If different content is posted in the same way, the user may be presented with an interface for operations that are not needed. Therefore, the related art may reduce the operation efficiency of the user.

It may be understood that before using the technical solutions disclosed in the embodiments of the present disclosure, the user shall be informed of the type, range of use, use scenarios, etc. of personal information involved in the present disclosure in an appropriate manner in accordance with relevant laws and regulations and the authorization of the user shall be obtained.

For example, in response to receiving an active request from the user, prompt information is sent to the user to clearly prompt the user that the requested operation will require access to and use of the user's personal information. As such, the user may independently choose, based on the prompt information, whether to provide personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also carry a selection control for the user to select "agree" or "disagree" to provide the personal information to the electronic device.

It may be understood that the above process of notifying and acquiring user authorization is only illustrative, and does not limit the implementations of the present disclosure. Other methods that satisfy relevant laws and regulations may also be applied to the implementations of the present disclosure.

Embodiments of the present disclosure provide a posting method, an apparatus, and a computer-readable storage medium, which may at least solve some of the above problems. It may be understood that the above video content and note content are only examples, and do not limit the embodiments of the present disclosure.

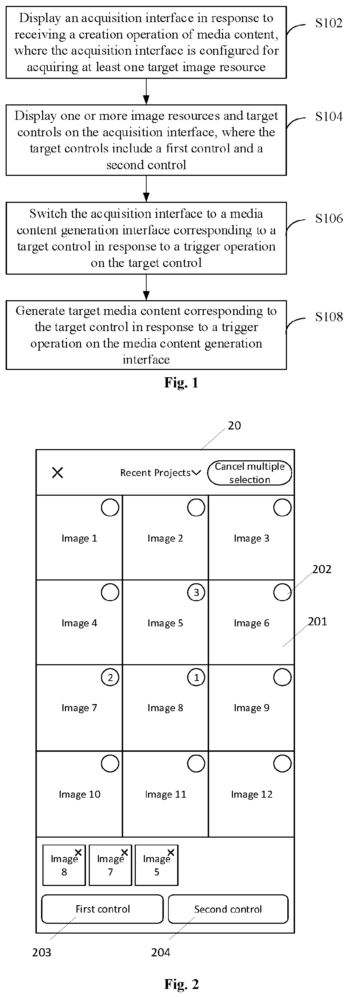

Fig. 1 shows a schematic flowchart of a posting method according to some embodiments of the present disclosure. As shown in Fig. 1, the posting method in this embodiment includes steps S102-S108.

In step S102, an acquisition interface is displayed in response to receiving a creation operation of media content, where the acquisition interface is configured for acquiring at least one target image resource.

The creation operation of the media content is used to initiate a creation process of the media content. The creation operation may be triggered by a user. For example, in a browsing interface of media content, an entry for creating the media content may be displayed. The user may perform the creation operation of the media content by triggering the entry, so as to create the media content. The acquisition interface may include a shooting interface or an uploading interface, etc., and the user acquires the target image resource through the acquisition interface.

The target image resource is used as a material for creating the media content. In the embodiments of the present disclosure, the image resource refers to a resource including an image, for example, including multiple types such as a static image, a dynamic image, or a video.

In step S104, one or more image resources and target controls are displayed on the acquisition interface, where the target controls include a first control and a second control.

The one or more image resources may be acquired through multiple channels. For example, the image resources may be existing image resources from a local material library of a user device. For another example, the image resources may be acquired in real time, and may be acquired by the user device or an extended device connected to the user device. In this case, the acquisition interface may include a shooting interface of image resources acquired in real time by a camera. The shooting interface may further provide an entry to a resource library of existing image resources, and if the user triggers the entry, the existing image resources are displayed.

The acquisition interface may display identifications of the one or more image resources. The one or more image resources are used as alternative image resources, and the target image resource is determined from these alternative image resources, for example, manually determined by the user or recommended to the user.

In a manual determination manner by the user, the one or more image resources are displayed on an image resource selection interface, and each image resource may be associated with a selection control. By triggering the selection control, a state of the image resource may be changed, where the state includes being selected and not being selected. After a confirmation operation is performed, the selected image resource is determined as the target image resource.

In a manner of recommending to the user, in a case that the authorization of the user is obtained, the recommended image resources may be displayed, for example, media content shot in a specified time period (for example, in the last week), etc. The user may make further adjustments based on the displayed results as needed.

Considering the publication of different types of content, the acquisition interface also displays the first control and the second control, both of which are used to trigger subsequent posting operations of the media content, but the two controls correspond to different posting paths.

In step S106, the acquisition interface is switched to a media content generation interface corresponding to a target control in response to a trigger operation on the target control, where the media content generation interface includes a text editing interface and an image editing interface, the first control corresponds to the text editing interface, and the second control corresponds to the image editing interface.

The media content generation interface refers to an interface that needs to be gone through when generating the media content, and the interface is used to perform at least one of processing information involved in the target media content to be generated or posting the target media content. In a case that the first control is triggered, the acquisition interface is switched to the text editing interface; and in a case that the second control is triggered, the acquisition interface is switched to the image editing interface. In this way, after the target image resource is acquired, the target media content may be generated in different ways through at least the above two controls. A generation manner corresponding to the first control is to generate the target media content after text editing, and a generation manner corresponding to the second control is to generate the target media content after image editing. Certainly, the generation manner corresponding to each control optionally includes other operations. For example, the generation manner corresponding to the first control may also include editing of the image resource as needed; and the generation manner corresponding to the second control may also include editing of text.

The text editing interface refers to an interface for adding text to or editing text of the target media content. In some embodiments, the text editing interface includes one or more text editing areas. The user may input text through a keyboard, voice-to-text, etc. Before the user inputs the text, a default prompt may be displayed in the text editing area. For example, the prompt may be "please input a title" and "please input the body". The text editing interface may be configured to require text input, or may be configured to allow empty input. In this way, in a case that text is input, the target media content may be generated based on the at least one target image resource and the text acquired from the text editing area.

The image editing interface refers to an interface for performing an editing operation on the image resource, which may be used for editing a static image, a dynamic image, or a video. The editing operation may include: an adjustment operation on attributes of the image resource, such as size, brightness, contrast, etc.; and an operation of adding an effect, such as an image style effect, a person makeup effect, etc. As needed, the editing operation may further include other operations, which will not be repeated here. As needed, the user may edit some or all of the target image resource, or may not edit any target image resource.

The first control and the second control correspond to different media content, for example. In some embodiments, the target media content includes first-type content and second-type content, the target media content generated based on the first control is the first-type content, and the target media content generated based on the second control is the second-type content. In this way, different media content generation manners may be used for features of different types of content. For example, the first-type content and the second-type content included in the target media content may both be picture-text content, but the first-type content may be media content that focuses on text expression, and the second-type content may be media content that focuses on a display effect of the image resource. For another example, the posted first-type content and the posted second-type content are both media content composed of pictures and text, but correspond to different playing modes. Exemplarily, a video content generation control may also be provided on the image editing interface, and the user may trigger the video content generation control to generate a video based on one or more target image resources, for example, to generate video content with one click by adding a template.

In step S108, the target media content corresponding to the target control is generated in response to a trigger operation on the media content generation interface. The trigger operation is used to directly or indirectly trigger the generation of the target media content.

In a case that the media content generation interface is a posting interface, the trigger operation is, for example, a confirmation operation for generating the target media content, such as a "post" control, to trigger the generation and posting of the target media content. For another example, the trigger operation on the media content generation interface is, for example, a confirmation operation for a current editing operation to trigger the display of other interfaces, and finally the posting interface is displayed, so as to further trigger the generation and posting of the target media content on the posting interface.

The target media content corresponding to the first control is generated based on the target image resource and an editing result of the text editing interface. The target media content corresponding to the second control is generated based on the target image resource and an editing result of the target image resource.

The above embodiments provide the first control and the second control for triggering different generation manners of target media content, where the first control is used to trigger the display of the text editing interface, and the second control is used to trigger the display of the image editing interface. In this way, different editing paths may be provided for different target media content. Therefore, the present disclosure improves the efficiency of editing and generating the target media content.

In some embodiments, the text editing page includes a posting page. A first posting interface of the target media content is displayed in response to a trigger operation on the first control; and a first image editing interface corresponding to the at least one target image resource is displayed in response to a trigger operation on the second control. That is, in a case that the first control is triggered, the first posting interface is displayed, and the first posting interface has a text editing function, so as to post the target media content after editing text on this interface; in a case that the second control is triggered, the first image editing interface is displayed. An exemplary implementation is described below.

Fig. 2 shows a schematic diagram of an acquisition interface according to some embodiments of the present disclosure. As shown in Fig. 2, the multiple image resources on the acquisition interface 20 in this embodiment include images 1 to 12, and each image corresponds to an image control. For example, the image 6 corresponds to an image control 201. The user determines the selected target image resource, for example, by clicking on the image control. Each image control may be associated with a state control, for example, the image control 201 is associated with a state control 202 to indicate whether the image is selected. For example, in a case that the image is selected, a number is displayed in its corresponding state control to indicate its order of selection. As needed, the state control 202 may also be displayed in other ways. In the example shown in the acquisition interface 20, the image 8, the image 7 and the image 5 are selected in sequence, and preview controls of the selected images are also displayed at the bottom for ease of preview by the user. In addition, the acquisition interface 20 also includes a first control 203 and a second control 204, so as to perform further processing based on the selected target image resource in different manners.

An embodiment in which the first control is triggered is described below.

In some embodiments, a posting interface is displayed after the first control is triggered. For example, in response to the trigger operation of the user on the first control, the first posting interface is displayed directly without going through any other interface; or in response to the trigger operation of the user on the first control, the first posting interface is displayed without going through an image editing interface.

The first posting interface includes information related to the first-type content, such as a picture or an identification corresponding to the picture included in the first-type content, a text editing area, an audio control, a related topic determination control, and other setting controls, etc.

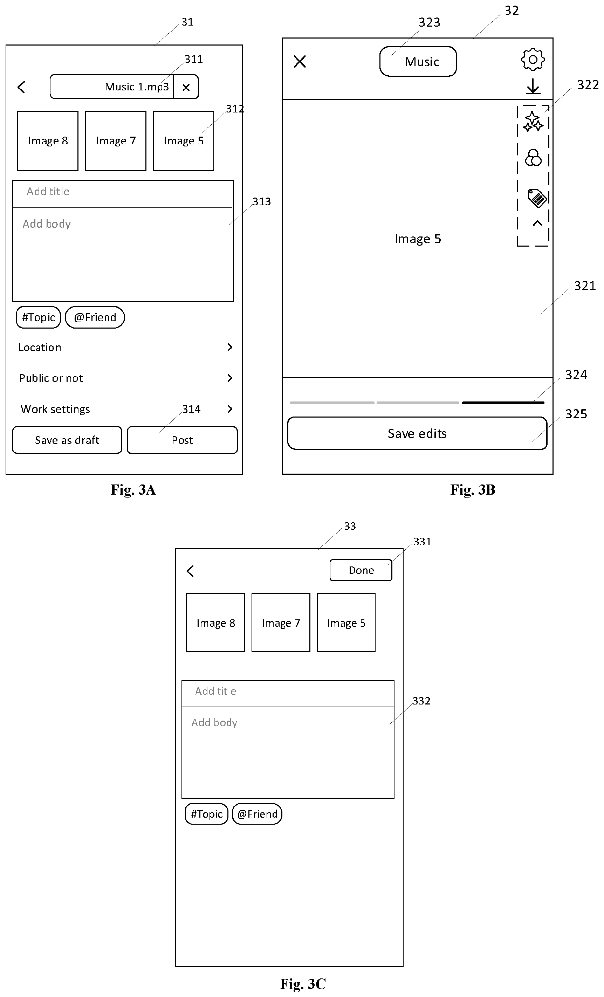

In some embodiments, the first posting interface includes a text editing area, and the first-type content is generated based on the target image resource and text acquired from the text editing area. Fig. 3A shows a schematic diagram of a first posting interface according to some embodiments of the present disclosure. As shown in Fig. 3A, the first posting interface 31 includes a text editing area 313. In this embodiment, the text editing area 313 is further divided into two parts: "add a title" and "add the body". However, those skilled in the art should know that the text editing area 313 may also be used as a text editing part of the work as a whole without being divided, and what is shown in Fig. 3A is an exemplary implementation, which does not impose any limitations on the specific implementation of the present disclosure. It may be understood that the text editing area 313 may support direct input by the user, or after the user triggers the text editing area 313, a text editing detail interface is jumped to, and the text editing detail interface supports text input and editing.

The first posting interface 31 includes a preview control of the selected target image resource, such as a preview control 312 corresponding to the image 5. The preview control in the first posting interface is a triggerable control, so that the user may perform preview and/or editing operations on the picture as needed before the first-type content is officially posted.

In some embodiments, in the first posting interface, a second image editing interface of a triggered target image resource is displayed in response to a trigger operation on the preview control of the target image resource; and in the second image editing interface, the user may perform an editing operation on the target image resource. In response to an editing completion operation on the triggered target image resource, the first posting interface is switched back to. That is, in the process of generating the first-type content, the text editing interface is displayed first, and in a case that there is an editing requirement for the image resource, the display of the editing interface of the image resource is triggered. In this way, for the first-type content in which text expression is more important, text editing may be made more convenient and direct, and the editing of the image resource is placed on an optional interface, which improves the operation efficiency of the user.

Fig. 3B shows a schematic diagram of a second image editing interface according to some embodiments of the present disclosure. For example, after the user triggers a preview control (such as the preview control 312) corresponding to any image in Fig. 3A, the image editing interface 32 in Fig. 3B may be displayed. The image editing interface 32 includes a preview area 321 of the target image resource, and the first image presented on this interface may be an image corresponding to the preview control triggered by the user in the first posting interface 31. For example, if the user triggers the preview control 312 in the interface 31, the image 5 is displayed first in the image editing interface 32. The user may switch the displayed target image resource through a switching operation (for example, swiping left or swiping right). The image editing interface 32 may further include a switching indication control 324, and the switching indication control 324 includes an identification corresponding to each target image resource, which is used to indicate the ranking of the currently displayed target image resource. For example, if the image 5 is the third target image resource, the third segment-shaped identification in the switching indication control 324 is displayed in a different style from the first two segment-shaped identifications.

The image editing interface 32 may further include an editing toolbar 322, which includes one or more editing tools. The function of the editing tool may be to modify attributes of the picture or to add an effect to the picture. The attributes of the picture include size, brightness, resolution, contrast, format, etc. The effects added to the picture include adding a sticker, adding text, adding an effect template to change a style of the picture, and beautification processing, etc. The editing tool in the editing toolbar 322 is used to edit the image currently displayed on the image editing interface 32. Subsequently, the edited target image resource is displayed in the preview area 321.

The image editing interface 32 may further include a music determination control 323, so that the user may add or modify background music for the first-type content. The music may come from a user device locally, or may come from a material that is authorized to use in a current Internet platform.

The image editing interface 32 may further include a save editing control 325, which is used to indicate that the editing is complete and to trigger the switching to the first posting interface, such as the first posting interface 31 shown in Fig. 3A.

In some embodiments, the first posting interface further includes a first audio control for determining background music of the first-type content. Back to Fig. 3A, the first posting interface 31 may further include a first audio control 311. The music in this control may be manually selected by the user by triggering the first audio control 311, or it may inherit the music selection result in the image editing interface 32. In addition, it may also be selected by default after the target image resource is acquired. It may be understood that, in order to further strengthen the text expression attribute of the first-type content, the first-type content may be generated without automatically adding background music by default.

In some embodiments, the playback volume of the first audio control is lower than the original volume of the background music. For example, the original volume of the background music is a first volume, but in the first posting interface, the playback volume of the background music is a second volume, and the volume of the background music may be the first volume or the second volume after the first-type content is posted. In this way, during the process of posting and browsing the first-type content, the interference with the user's operation and text browsing may be minimized.

In some embodiments, the first-type content is generated in response to a posting operation on the first posting interface. For example, the first posting interface 31 may further include a posting control 314, and in a case that the posting control 314 is triggered, the first-type content is generated. Then, it may be posted, for example, the first-type content is displayed in a media content stream. The media content stream includes a collection of media content, and the media content stream supports the user to switch media content by sliding.

The first posting interface 31 may be displayed directly after the first control is triggered, or after the first control is triggered, the text editing detail interface may be displayed first, and then the first posting interface is displayed. For example, after the first control 203 in Fig. 2 is triggered, the text editing detail interface 33 shown in Fig. 3C may be displayed directly. The text editing detail interface 33 includes a text editing area 332, and for the specific implementation of the text editing area 332, reference may be made to the text editing area in other embodiments, which will not be repeated here. Exemplarily, the text editing area of the text editing detail page may be larger in size than the first posting page, which is convenient for the user to edit and preview the text content input. The text editing page may not display the target image resource and other setting controls, but only display controls associated with text input, such as a topic input control or a @ control, etc., so that the user may edit text. In addition, the text editing detail interface 33 further includes a confirmation control, such as a "complete" control 331. In response to the trigger on the control 331, the first posting interface 31 shown in Fig. 3A may be displayed, and the content in the text editing area 332 is automatically filled in the text editing area 313 in the first posting interface 31.

An embodiment in which the second control is triggered is described below.

In some embodiments, after the second control is triggered, the step of editing the target image resource may be performed first before the text editing is performed. For example, in response to the trigger operation of the user on the second control, the first image editing interface is displayed first, and then the text editing interface is displayed. The first image editing interface may be displayed immediately without going through other interfaces after the second control is triggered, or may be displayed after going through other non-text editing interfaces.

In some other embodiments, the media content may be directly generated or posted on the first image editing page without going through the text editing page. Exemplarily, when the user needs to express in text, the user may complete the visual expression of the text by adding a text sticker on the first image editing page, and directly generate or post the media content after the image editing is completed.

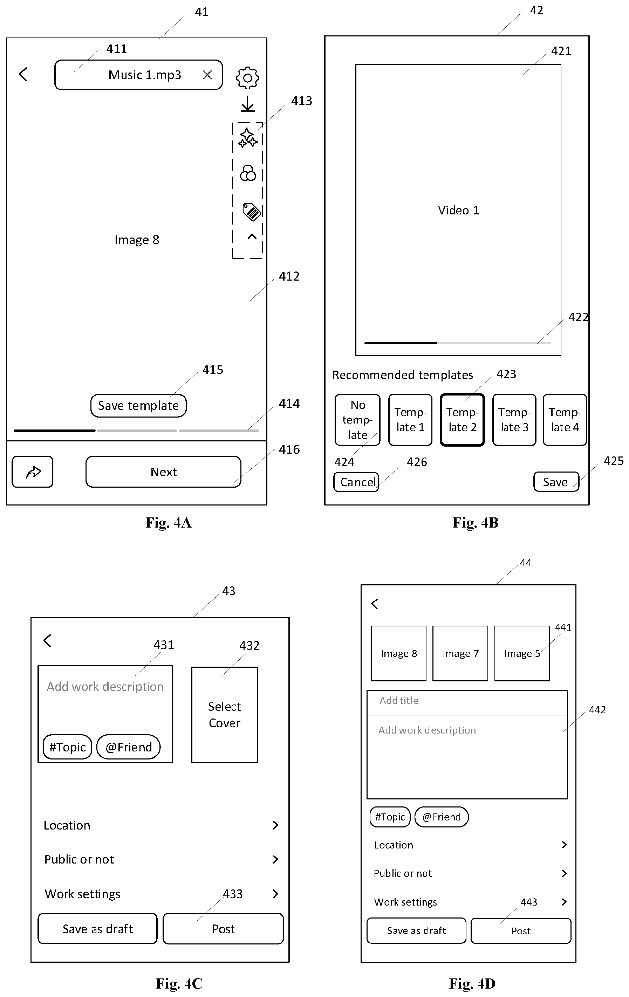

Fig. 4A shows a schematic diagram of a first image editing interface according to some embodiments of the present disclosure. The image editing interface 41 (the first image editing interface) shown in Fig. 4A is displayed, for example, after the second control 204 in Fig. 2 is triggered. The image editing interface 41 includes a preview area 412 of the target image resource. In a case that multiple target image resources exist, the user may switch to display other target image resources through a switching operation (for example, swiping left or swiping right). The image editing interface 41 may further include a switching indication control 414, which is used to indicate the ranking of the currently displayed target image resource. For example, if the image 8 is the first target image resource, the first segment-shaped identification in the switching indication control 414 uses a different style from the other two segment-shaped identifications.

The image editing interface 41 may further include an editing toolbar 413, and for its function, reference may be made to the editing toolbar 322 in Fig. 3B, which will not be repeated here.

The first image editing interface may further include a second audio control for determining background music of the second-type content. For example, the image editing interface 41 may further include a music determination control 411, so that the user may add or modify the background music for the second-type content. The music may come from a local user device, or may come from a material that is authorized to be used on a current internet platform, or the default background music may be determined after the target image resource is acquired.

In some embodiments, a second posting interface of the second-type content is displayed in response to an editing complete operation on the target image resource in the first image editing interface; and the second-type content is generated in response to a posting operation on the second posting interface. In this way, the second-type content is generated through a path of selecting the image resource, editing the image resource, and editing the posting information (such as text description and other information).

In some embodiments, a first confirmation control and a second confirmation control are further displayed in the first image editing interface, the first confirmation control is used to post video content, and the second confirmation control is used to post picture-text content. That is, the second-type content may further include two subtypes: video content and picture-text content. Both subtypes convey information to the user mainly through an image display effect, where the video is content in which a new media format is generated based on at least one image; while the media format of the image resource in the picture-text content does not essentially change, in response to the target media resource including multiple pictures, the picture-text content still includes multiple independent picture resources that may be switched, such as multiple independent static images or dynamic images; in response to the target media resource including at least one picture and/or at least one video, the multiple image resources included in the picture-text content are still displayed as multiple independent paragraphs, for example, sliding switching between each picture or video paragraph may be supported. The generation paths of the two subtypes are both triggered by the first image editing interface, which improves the efficiency and flexibility of generating the target media content, and reduces the complexity of the user operation.

The posting paths of the two subtypes of the second-type content are exemplarily described below.

In a case that the first confirmation control is triggered, a video editing interface may be displayed. In some embodiments, the first confirmation control is used to add a video template, and in the first image editing interface, a preview interface of a target video generated based on the video template and the selected image is displayed in response to the user triggering the first confirmation control; in the preview interface, the second posting interface corresponding to the target video is displayed in response to a confirmation operation of the user on the target video; and the second-type content is generated in response to the posting operation on the second posting interface. That is, by triggering the operation of adding the video template, the type of the target media content is determined as the video content, and the posting of the video content is triggered through editing (optional) and further confirmation in the preview interface. In this way, it is possible to naturally transition from the editing of the image to the generation of the video to support the posting of more types of second-type content.

Still taking Fig. 4A as an example, the recommended template control 415 in Fig. 4A may be used as the first confirmation control. In a case that the recommended template control 415 is triggered, the video editing interface 42 (or referred to as a video preview interface) shown in Fig. 4B may be displayed, which includes a video 1 generated based on the target image resource and a currently effective template 2, and the video 1 is displayed in the video preview area 421. The progress control 422 is used to represent the playback progress of the video 1, and the user may also adjust the control to change the playback progress of the video.

The video editing interface 42 may further include a recommended template list, which includes template controls corresponding to one or more video templates recommended for the user. The video template control includes, for example, at least one of a concatenating effect for different target image resources, a transition effect, a video effect, text or a sticker for adding to the video, and background music used in the video. The control of the currently effective template may be displayed in a different style from the controls of other templates, for example, the border of the template control 423 corresponding to the template 2 is different from the borders of other template controls. In addition, the recommended template list may further include a control 424 that does not use a template, and when this control is triggered, the video may be generated simply by displaying the target image resources in sequence.

The video editing interface 42 may further include a save control 425 to trigger the subsequent posting process of the video content. In addition, if the user does not want to post the video-type content, the user may also trigger the cancel control 426 in the video editing interface 42 to return to the image editing interface 41.

Fig. 4C shows a schematic diagram of a video posting interface (that is, a second posting interface corresponding to the video) according to some embodiments of the present disclosure. For example, after the save control 425 in Fig. 4B is triggered, the video posting interface 43 shown in Fig. 4C is displayed. The video posting interface 43 includes a text editing control 431 for the user to input a description of the video. The video content posting interface 43 may further include a cover selection control 432, which is used to select a cover for the generated video. The cover refers to an image that is displayed by default when the video is not played after the video is posted. After the cover selection control 432 is triggered, one or more frames in the video or the target image resource may be displayed for the user to select. In some embodiments, in a case that the user does not make a selection, a frame in the video or a certain target image resource may be selected as the cover of the video according to a default rule. The video content posting interface 43 may further include a posting control 433 for posting the video.

The posting of the picture-text content of the second-type content is exemplarily described below. In some embodiments, in the first image editing interface, the second posting interface corresponding to the picture-text content is displayed in response to the user triggering the second confirmation control; and the second-type content is generated in response to the posting operation on the second posting interface. That is, in the first image editing interface, in a case that the second confirmation control is triggered, the posting interface of the picture-text content (that is, another type of second posting interface) may be displayed.

Fig. 4D shows a schematic diagram of a posting interface of picture-text content according to some embodiments of the present disclosure. For example, after the "next" control 416 in Fig. 4A is triggered, the picture-text posting interface 44 in Fig. 4D is displayed. The picture-text posting interface 44 includes a preview control of the target image resource, such as a preview control 441 corresponding to the image 5. In a case that the user edits the target image resource, the target image resource in the picture-text posting interface 44 is the edited image resource.

The picture-text posting interface 44 may further include a text editing area 442. However, those skilled in the art should know that what is shown in Fig. 4D is an exemplary implementation, which does not impose any limitations on the specific implementation of the present disclosure.

The picture-text posting interface 44 may further include a posting control 443 for posting the picture-text content.

Through the exemplary description of each of the above embodiments, the generation manners of the first-type content and the second-type content have been clearly introduced. Next, the implementations of the first-type content and the second-type content and the display manners after they are posted are further described.

After the target media content is posted, the target media content is displayed in the media content display interface. From the perspective of the viewer, both the first-type content and the second-type content may be displayed using the same display interface of media content stream, except that the display forms are different. Technically, different players or different playing configurations may be used when playing different target media content. For example, one or more pieces of media content may be displayed in the media content stream, and the media content may be switched through a switching operation (such as an up-sliding or down-sliding operation) of the user. By acquiring the type of each piece of media content to be played, the player or the playing configuration corresponding to the type may be used for display. By making the posted first-type content and the posted second-type content correspond to different playing modes, it is possible to convey to the user the information that different types of content focus on.

The first-type content is more inclined to convey information through text. Although the first-type content is also configured with the image resource, the target image resource in the posted first-type content may be non-autoplay. In addition, the posted first-type content may not automatically play the background music by default. That is, in the process of displaying the first-type content, the multiple target image resources of the first-type content remain non-automatically switched, so that the attention of the viewer is focused on the text part.

In the media content display interface for displaying the posted first-type content, switching display among the multiple target image resources of the first-type content is performed in response to a switching operation on the media content display interface. In this way, in a non-autoplay case, the viewer may manually switch and view the first-type content. In addition, when displaying the posted first-type content (picture-text content), a control associated with the image content may also be given a different style from the picture-text content of the second-type content, so as to reduce the attention to the control related to the image content.

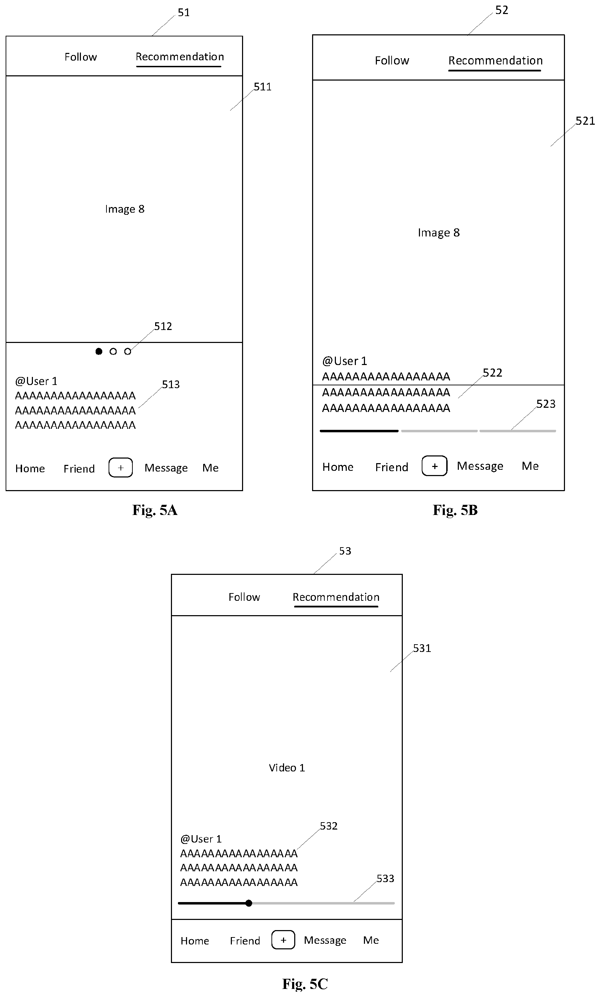

Fig. 5A shows a schematic diagram of a media content display interface of first-type content according to some embodiments of the present disclosure. As shown in Fig. 5A, the media content display interface 51 of this embodiment includes an image display control 511, which is used to display a target image resource. The media content display interface 51 may further include an indication control 512, which is used to indicate the ranking of the currently displayed target image resource in the image display control 511. For example, the indication control 512 in Fig. 5 includes three circles, which correspond to three target image resources (an image 8, an image 7, and an image 5) in the first-type content in sequence, then in response to the currently displayed first target image resource being the image 8, the first of the three circles is presented in a different style from the other two circles. In response to the user performing a switching operation on the display control 511, such as swiping left, the image 8 is switched to the image 7.

The media content display interface 51 further includes a text display area 513, which is used to display the text "AAA..." in the first-type content, and information of the poster may also be displayed as needed, for example, "@user 1" is used to indicate that the first-type content is posted by the user 1.

The second-type content is more inclined to convey information through images. In the process of displaying the second-type content, the multiple target image resources of the second-type content have an automatic switching effect. In this way, through the automatic switching and display of the multiple target image resources of the target image resource, the attention of the viewer may be focused on the image part. The second-type content is, for example, "picture-text content" or a "video".

In some embodiments, the picture-text content is configured to support automatic playback of the multiple target image resources in the picture-text content in the media content display interface. Fig. 5B shows a schematic diagram of a media content display interface of picture-text content according to some embodiments of the present disclosure. As shown in Fig. 5B, the media content display interface 52 of this embodiment includes an image display control 521, which is used to display a target image resource. If the picture-text content includes multiple target image resources, these icon image resources are automatically switched and displayed in the display control 521. Exemplarily, when the second-type media content is displayed, the image display area may be larger than that of the first-type media content, or the image display area may overlap with the text display area, so that the image display is more prominent; while the image display area of the first-type may be smaller than that of the second-type media content, or the image display area may be distinguished from the text display area without overlap, so that the text display is more prominent.

In some embodiments, the media content display interface of the picture-text content includes a progress control, and the progress control includes progress identifications in a one-to-one correspondence with the multiple target image resources of the picture-text content. As shown in Fig. 5B, the media content display interface 52 may further include a progress control 523, which includes three segments in a one-to-one correspondence with three target image resources, with each segment being a progress identification. The progress identification of the currently displayed target image resource is displayed in a different style from other progress identifications. For example, in response to the picture-text content including an image 8, an image 7, and an image 5, and the currently displayed first target image resource is the image 8, the color of the first segment-shaped identification is deeper than the colors of other segment-shaped identifications. With the automatic switching of the target image resource, the style of the progress control also switches accordingly.

In the media content display interface for displaying the posted picture-text content, switching display among the multiple target image resources of the picture-text content is performed in response to a switching operation on the media content display interface. For example, when the user performs a switching operation on the display control 511, such as swiping left, the image 8 is switched to the image 7. In this way, when the target image resource is automatically played to bring the viewer a video viewing-like experience, the user is also supported to manually view each picture.

The media content display interface 52 further includes a text display area 522, which is used to display the description information "AAA..." of the picture-text content, and poster information may also be displayed as needed, for example, "@user 1" is used to indicate that the first-type content is posted by the user 1.

In some embodiments, in order to enhance the image display effect of the second-type content, the picture-text content of the second-type content further includes automatically played background music, and the multiple target image resources in the picture-text content are switched and displayed based on the rhythm points of the background music. For this effect, a rhythm point in the background music may be determined as a switching point of the target image resource through audio analysis of the background music of the picture-text content. In addition, a transition effect may be added between the target image resources to achieve a smoother switching. In this way, the picture-text content may be presented to the viewer with an effect similar to that of an edited video.

In some embodiments, the second-type content may further include video content, and similar to the display of the picture-text content in the second media content, the display of the video content may also adopt the above display manner that highlights the image effect. In addition, when the video content is displayed, an associated control for video playback may also be configured to facilitate the user operation.

Fig. 5C shows a schematic diagram of a media content display interface of a video according to some embodiments of the present disclosure. As shown in Fig. 5C, the video media content display interface 53 of this embodiment includes a video playing control 531, which is used to display a video 1 generated based on the target image resource. In addition, the media content display interface 53 may further include a text display area 532 and a progress control 533. Different from the progress control 523 in Fig. 5B, the progress identification in the progress control 533 represents the played time of the video.

Through the above embodiments, the present disclosure supports the use of the corresponding media content display interface for the video generated according to different posting paths. In this way, the information to be conveyed by the target media content may be clearly conveyed both from the creator side and from the consumer side, and the efficiency of information dissemination is improved.

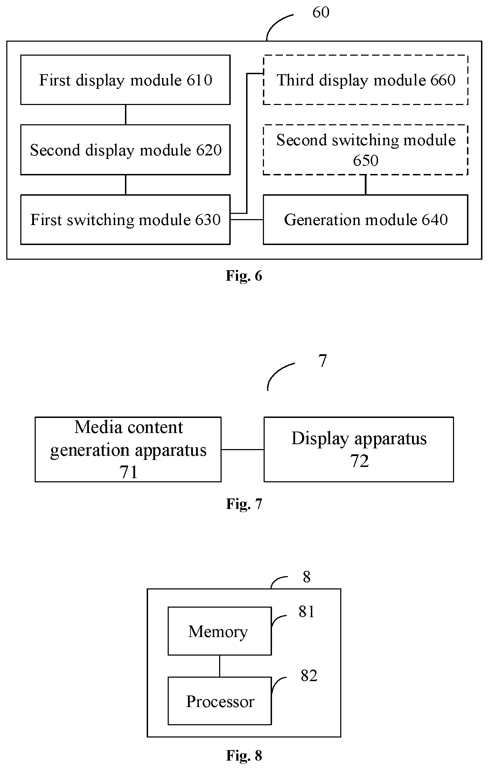

Embodiments of related devices of the present disclosure are described below with reference to FIGS. 6 to 9.

Fig. 6 shows a schematic diagram of a structure of a media content generation apparatus according to some embodiments of the present disclosure. As shown in Fig. 6, the media content generation apparatus 60 of this embodiment includes: a first display module 610, which is configured to display an acquisition interface in response to receiving a creation operation of media content, where the acquisition interface is configured for acquiring at least one target image resource; a second display module 620, which is configured to display one or more image resources and target controls on the acquisition interface, where the target controls include a first control and a second control; a first switching module 630, which is configured to switch the acquisition interface to a media content generation interface corresponding to a target control in response to a trigger operation on the target control, where the media content generation interface includes a text editing interface and an image editing interface, the first control corresponds to the text editing interface, and the second control corresponds to the image editing interface; and a generation module 640, which is configured to generate target media content corresponding to the target control in response to a trigger operation on the media content generation interface.

In some embodiments, the text editing interface includes a first posting interface, the image editing interface includes a first image editing interface, and the first switching module 630 is further configured to: display the first posting interface of the target media content in response to a trigger operation on the first control; and display the first image editing interface corresponding to the at least one target image resource in response to a trigger operation on the second control.

In some embodiments, the target media content includes first-type content and second-type content, the target media content generated based on the first control is the first-type content, the target media content generated based on the second control is the second-type content, and the posted first-type content and the posted second-type content correspond to different playing modes.

In some embodiments, the generation module 640 is further configured to: generate the first-type content in response to a posting operation on the first posting interface.

In some embodiments, the generation module 640 is further configured to: display a second posting interface of the second-type content in response to an editing completion operation on the target image resource in the first image editing interface; and generate the second-type content in response to a posting operation on the second posting interface.

In some embodiments, the target media content includes multiple target image resources; the multiple target image resources remain non-automatically switched in a process of displaying the first-type content; and the multiple target image resources have an automatic switching effect in a process of displaying the second-type content.

In some embodiments, the first posting interface includes a text editing area, and the first-type content is generated based on the at least one target image resource and text acquired from the text editing area.

In some embodiments, the first posting interface includes a preview control of the target image resource, and the posting apparatus 60 further includes a second switching module 650, which is configured to: display, in response to a trigger operation on the preview control of the target image resource, a second image editing interface of the triggered target image resource in the first posting interface; and switch to the first posting interface in response to an editing complete operation on the triggered target image resource in the second image editing interface.

In some embodiments, the first posting interface includes a first audio control for determining background music of the first-type content; and/or the first image editing interface includes a second audio control for determining background music of the second-type content.

In some embodiments, the second-type content includes video content and picture-text content, and the posting apparatus 60 further includes a third display module 660, which is configured to display a first confirmation control and a second confirmation control in the first image editing interface, where the first confirmation control is configured to post the video content, and the second confirmation control is configured to post the picture-text content.

In some embodiments, at least one of the picture-text content or the first-type content is configured to support switching display among the multiple target image resources in response to a switching operation on a media content display interface, where the media content display interface is configured to display the posted target media content.

In some embodiments, the first confirmation control is configured to add a video template, and the generation module 640 is further configured to: display a preview interface of a target video generated based on the video template and the selected image in the first image editing interface in response to the user triggering the first confirmation control; display a second posting interface corresponding to the target video in response to a confirmation operation of the user on the target video in the preview interface; and generate the second-type content in response to a posting operation on the second posting interface.

In some embodiments, the generation module 640 is further configured to: display the second posting interface corresponding to the picture-text content in the first image editing interface in response to the user triggering the second confirmation control; and generate the second-type content in response to a posting operation on the second posting interface.

In some embodiments, the picture-text content is configured to support automatic playback of the multiple target image resources in the picture-text content in the media content display interface.

In some embodiments, the media content display interface includes a progress control, and the progress control includes progress identifications in a one-to-one correspondence with the multiple target image resources.

In some embodiments, the picture-text content further includes background music, and the multiple target image resources in the picture-text content are switched and displayed based on a rhythm point of the background music.

In some embodiments, the text editing interface includes a text editing detail interface, and the generation module 640 is further configured to: switch to the first posting interface in response to a trigger operation on the text editing detail interface; and generate the target media content corresponding to the target control in response to a trigger operation on the first posting interface.

Fig. 7 shows a schematic diagram of a structure of a media content posting system according to some embodiments of the present disclosure. As shown in Fig. 7, the posting system 7 of this embodiment includes a media content generation apparatus 71 and a display apparatus 72. For the specific implementation of the generation apparatus 71, reference may be made to the generation apparatus 60 in the embodiment of Fig. 6. The display apparatus 72 is configured to display, in a media content display interface, target media content generated by the generation apparatus.

It should be noted that each of the above units is only a logical module divided according to the specific functions implemented by the unit, and is not used to limit the specific implementation, for example, the unit may be implemented in a form of software, hardware, or a combination of software and hardware. In an actual implementation, each of the above units may be implemented as an independent physical entity, or may be implemented by a single entity (for example, a processor (CPU or DSP, etc.), an integrated circuit, etc.). In addition, each of the above units is indicated by dotted lines in the drawings to indicate that these units may not actually exist, and the operations/functions implemented by them may be implemented by the processing circuit itself.

In addition, although not shown, the device may also include a memory, which may store various information generated in operations by the device and units included in the device, programs and data for operations, data to be sent by the communication unit, and the like. The memory may be a volatile memory and/or a non-volatile memory. For example, the memory may include but is not limited to a random access memory (RAM), a dynamic random access memory (DRAM), a static random access memory (SRAM), a read-only memory (ROM), and a flash memory. Certainly, the memory may also be located outside the device. Optionally, although not shown, the device may also include a communication unit, which may be used to communicate with other apparatuses. In an example, the communication unit may be implemented in any appropriate manner known in the art, for example, including communication components such as an antenna array and/or a radio frequency link, various types of interfaces, communication units, and the like. Details are not described here again. In addition, the device may further include other components not shown, such as a radio frequency link, a baseband processing unit, a network interface, a processor, a controller, and the like. Details are not described here again.

Some embodiments of the present disclosure further provide an electronic device. Fig. 8 shows a schematic diagram of a structure of some embodiments of an electronic device of the present disclosure. For example, in some embodiments, the electronic device 8 may be various types of devices, for example, may include but is not limited to mobile terminals such as a mobile phone, a notebook computer, a digital broadcast receiver, a personal digital assistant (PDA), a tablet computer (PAD), a portable media player (PMP), and an in-vehicle terminal (such as an in-vehicle navigation terminal), and fixed terminals such as a digital TV and a desktop computer. For example, the electronic device 8 may include a display panel for displaying data and/or an execution result used in the solution according to the present disclosure. For example, the display panel may be various shapes, such as a rectangular panel, an elliptical panel, or a polygonal panel. In addition, the display panel may be not only a flat panel, but also a curved panel or even a spherical panel.

As shown in Fig. 8, the electronic device 8 of this embodiment includes: a memory 81 and a processor 82 coupled to the memory 81. It should be noted that the components of the electronic device 8 shown in Fig. 8 are only exemplary and non-restrictive, and the electronic device 8 may also have other components according to actual application needs. The processor 82 may control other components in the electronic device 8 to perform desired functions.

In some embodiments, the memory 81 is used to store one or more computer-readable instructions. The processor 82 is configured to, when running the computer-readable instructions, implement the method according to any of the above embodiments when the computer-readable instructions are run by the processor 82. For the specific implementation and related explanation content of each step of the method, reference may be made to the above embodiments, and details of the same parts are not repeated here.

For example, the processor 82 and the memory 81 may directly or indirectly communicate with each other. For example, the processor 82 and the memory 81 may communicate through a network. The network may include a wireless network, a wired network, and/or any combination of a wireless network and a wired network. The processor 82 and the memory 81 may also communicate with each other through a system bus, which is not limited in the present disclosure.

For example, the processor 82 may be embodied as various appropriate processors and processing apparatuses, such as a central processing unit (CPU), a graphics processing unit (Graphics Processing Unit, GPU), a network processor (NP), etc.; and may also be a digital signal processor (DSP), an application specific integrated circuit (ASIC), a field programmable gate array (FPGA) or other programmable logic devices, a discrete gate or transistor logic device, and a discrete hardware component. The central processing unit (CPU) may have an X86 or ARM architecture or the like. For example, the memory 81 may include any combination of various forms of computer-readable storage media, such as a volatile memory and/or a non-volatile memory. For example, the memory 81 may include a system memory, and the system memory stores an operating system, an application, a boot loader (Boot Loader), a database, other programs, and the like. Various applications, various data, and the like may also be stored in the storage medium.

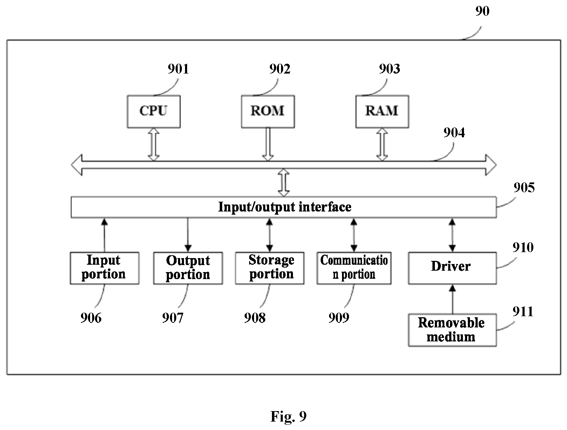

In addition, according to some embodiments of the present disclosure, in the case that various operations/processes according to the present disclosure are implemented by software and/or firmware, a program constituting the software may be installed from a storage medium or a network to a computer system having a dedicated hardware structure, such as the computer system 900 shown in Fig. 9, and the computer system may perform various functions, including the functions as described above, when installed with various programs. Fig. 9 is a block diagram showing an example structure of a computer system that may be used in an embodiment according to the present disclosure.

In Fig. 9, a central processing unit (CPU) 901 performs various processes based on a program stored in a read-only memory (ROM) 902 or a program loaded from a storage part 908 into a random access memory (RAM) 903. The RAM 903 also stores data required when the CPU 901 performs various processes and the like according to needs. The central processing unit is only exemplary, and it may be other types of processors, such as various processors as described above. The ROM 902, the RAM 903, and the storage part 908 may be various forms of computer-readable storage media, as described below. It should be noted that although the ROM 902, the RAM 903, and the storage apparatus 908 are shown separately in Fig. 9, one or more of them may be combined or located in the same or different memories or storage modules.

The CPU 901, the ROM 902, and the RAM 903 are connected to each other via a bus 904. An input/output interface 905 is also connected to the bus 904.

The following components are connected to the input/output interface 905: an input part 906, such as a touch screen, a touchpad, a keyboard, a mouse, an image sensor, a microphone, an accelerometer, and a gyroscope; an output part 907, including a display, such as a cathode ray tube (CRT), a liquid crystal display (LCD), a speaker, and a vibrator; the storage part 908, including a hard disk, a magnetic tape, etc.; and a communication part 909, including a network interface card, such as a LAN card, a modem, etc. The communication part 909 allows communication processing to be performed via a network such as the Internet. It is easily understood that although each apparatus or module in the electronic device 900 is shown in Fig. 9 to communicate through the bus 904, they may also communicate through a network or other means, where the network may include a wireless network, a wired network, and/or any combination of a wireless network and a wired network.

A driver 910 is also connected to the input/output interface 905 as needed. A removable medium 911, such as a magnetic disk, an optical disc, a magneto-optical disc, a semiconductor memory, etc., is installed on the driver 910 as needed, so that a computer program read therefrom is installed into the storage part 908 as needed.

In the case that the above series of processing are implemented by software, a program constituting the software may be installed from a network such as the Internet or a storage medium such as the removable medium 911.

According to the embodiments of the present disclosure, the process described above with reference to the flowchart may be implemented as a computer software program. For example, the embodiments of the present disclosure include a computer program product, which includes a computer program carried on a computer-readable medium, where the computer program contains program code for performing the method shown in the flowchart. In such an embodiment, the computer program may be downloaded and installed from a network through the communication apparatus 609, or installed from the storage apparatus 608, or installed from the ROM 602. When the computer program is executed by the CPU 601, the above-mentioned functions defined in the method of the embodiments of the present disclosure are executed.

It should be noted that in the context of the present disclosure, the computer-readable medium may be a tangible medium that may contain or store a program for use by or in combination with an instruction execution system, apparatus or device. The computer-readable medium may be a computer-readable signal medium, a computer-readable storage medium, or any combination of the above two. The computer-readable storage medium may be, for example, but is not limited to, an electrical, magnetic, optical, electromagnetic, infrared, or semiconductor system, apparatus or device, or any suitable combination of the above. More specific examples of the computer-readable storage medium may include, but are not limited to: an electrically connected portable computer magnetic disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier wave, and computer-readable program code is carried in the data signal. This propagated data signal may take many forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit a program for use by or in combination with an instruction execution system, apparatus or device. The program code contained on the computer-readable medium may be transmitted in any suitable medium, including but not limited to: a wire, an optical cable, a radio frequency (RF), etc., or any suitable combination of the above.

The above computer-readable medium may be contained in the above electronic device, or may exist alone without being assembled into the electronic device.

In some embodiments, there is further provided a computer program, including: instructions that, when executed by a processor, cause the processor to execute the method of any of the above embodiments. For example, the instructions may be embodied as computer program code.

In the embodiments of the present disclosure, computer program code for performing the operations of the present disclosure may be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be executed entirely on a user computer, partly executed on a user computer, executed as an independent software package, partly executed on a user computer and partly executed on a remote computer, or entirely executed on a remote computer or a server. In the case of involving a remote computer, the remote computer may be connected to the user computer through any kind of network (including a local area network (LAN) or a wide area network (WAN)), or it may be connected to an external computer (for example, connected by using Internet provided by an Internet service provider).

The flowcharts and block diagrams in the drawings illustrate the possibly implemented architectures, functions and operations of the system, the method and the computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The modules, components or units involved in the embodiments of the present disclosure may be implemented by software or by hardware. Among them, the name of the module, component or unit does not constitute a limitation on the module, component or unit itself under certain circumstances.

The functions described above may be performed at least partially by one or more hardware logic components. For example, without limitation, exemplary hardware logic components that may be used include: a field programmable gate array (FPGA), an application specific integrated circuit (ASIC), an application specific standard product (ASSP), a system on chip (SOC), a complex programmable logical device (CPLD), and the like.

The above description only shows some embodiments of the present disclosure and illustrates technical principles applied in the present application. Those skilled in the art should understand that the scope of disclosure involved in the present disclosure is not limited to the technical solutions formed by the specific combination of the above technical features, and should also cover other technical solutions formed by the arbitrary combination of the above technical features or their equivalent features without departing from the above disclosed concept. For example, the above features and the technical features provided in the present disclosure (but not limited to) with similar functions may be replaced each other to form a technical solution.

In the description provided herein, many specific details are set forth. However, it should be understood that the embodiments of the present disclosure may be implemented without these specific details. In other cases, well-known methods, structures and techniques are not shown in detail in order not to obscure the understanding of the description.

Furthermore, although each operation is depicted in a specific order, this should not be understood as requiring these operations to be executed in the specific order shown or in a sequential order. Under certain circumstances, multitasking and parallel processing may be advantageous. Similarly, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although some specific embodiments of the present disclosure have been described in detail by way of examples, those skilled in the art should understand that the above examples are only for illustration, and are not intended to limit the scope of the present disclosure. Those skilled in the art should understand that the above embodiments may be modified without departing from the scope and spirit of the present disclosure. The scope of the present disclosure is defined by the appended claims.

## Claims

1. A media content generation method, comprising:
displaying an acquisition interface in response to receiving a creation operation of media content, wherein the acquisition interface is configured for acquiring at least one target image resource;
displaying one or more image resources and target controls on the acquisition interface, wherein the target controls comprise a first control and a second control;
switching the acquisition interface to a media content generation interface corresponding to a target control in response to a trigger operation on the target control, wherein the media content generation interface comprises a text editing interface and an image editing interface, the first control corresponds to the text editing interface, and the second control corresponds to the image editing interface; and
generating target media content corresponding to the target control in response to a trigger operation on the media content generation interface.

2. The generation method of claim 1, wherein the text editing interface comprises a first posting interface, the image editing interface comprises a first image editing interface, and the switching the acquisition interface to the media content generation interface corresponding to the target control in response to the trigger operation on the target control comprises at least one of:
displaying the first posting interface of the target media content in response to a trigger operation on the first control; or
displaying the first image editing interface corresponding to the at least one target image resource in response to a trigger operation on the second control.

3. The generation method of claim 2, wherein the target media content comprises first-type content and second-type content, the target media content generated based on the first control is the first-type content, the target media content generated based on the second control is the second-type content, and posted first-type content and posted second-type content correspond to different playing modes.

4. The generation method of claim 3, wherein the generating the target media content corresponding to the target control in response to the trigger operation on the media content generation interface comprises:
generating the first-type content in response to a posting operation on the first posting interface.

5. The generation method of claim 3 or 4, wherein the generating the target media content corresponding to the target control in response to the trigger operation on the media content generation interface comprises:
displaying a second posting interface of the second-type content in response to an editing completion operation on the target image resource in the first image editing interface; and
generating the second-type content in response to a posting operation on the second posting interface.

6. The generation method of any of claims 3 to 5, wherein:
the target media content comprises multiple target image resources;
the multiple target image resources remain non-automatically switched in a process of displaying the first-type content; and
the multiple target image resources have an automatic switching effect in a process of displaying the second-type content.

7. The generation method of any of claims 3 to 6, wherein the first posting interface comprises a text editing area, and the first-type content is generated based on the at least one target image resource and text acquired from the text editing area.

8. The generation method of any of claims 2 to 7, wherein the first posting interface comprises a preview control of the target image resource, and the posting method further comprises:
displaying, in response to a trigger operation on the preview control of the target image resource, a second image editing interface of the triggered target image resource in the first posting interface; and
switching to the first posting interface in response to an editing complete operation on the triggered target image resource in the second image editing interface.

9. The generation method of any of claims 3 to 8, wherein:
the first posting interface comprises a first audio control for determining background music of the first-type content; and/or
the first image editing interface comprises a second audio control for determining background music of the second-type content.

10. The generation method of any of claims 3 to 9, wherein the second-type content comprises video content and picture-text content, and the generation method further comprises:
displaying a first confirmation control and a second confirmation control in the first image editing interface, wherein the first confirmation control is configured to post the video content, and the second confirmation control is configured to post the picture-text content.

11. The generation method of claim 10, wherein at least one of the picture-text content or the first-type content is configured to support switching display among multiple target image resources in response to a switching operation on a media content display interface, wherein the media content display interface is configured to display the posted target media content.

12. The generation method of claim 10 or 11, wherein the first confirmation control is configured to add a video template, and the generating the target media content corresponding to the target control in response to the trigger operation on the media content generation interface comprises:
displaying a preview interface of a target video generated based on the video template and selected image in the first image editing interface in response to the user triggering the first confirmation control;
displaying the second posting interface corresponding to the target video in response to a confirmation operation of the user on the target video in the preview interface; and
generating the second-type content in response to a posting operation on the second posting interface.

13. The generation method of any of claims 10 to 12, wherein the generating the target media content corresponding to the target control in response to the trigger operation on the media content generation interface comprises:
displaying the second posting interface corresponding to the picture-text content in the first image editing interface in response to the user triggering the second confirmation control; and
generating the second-type content in response to a posting operation on the second posting interface.

14. The generation method of any of claims 10 to 13, wherein the picture-text content is configured to support automatic playback of multiple target image resources in the picture-text content in the media content display interface.

15. The generation method of claim 14, wherein the media content display interface comprises a progress control, and the progress control comprises progress identifications in a one-to-one correspondence with the multiple target image resources.

16. The generation method of any of claims 10 to 15, wherein the picture-text content further comprises background music, and the multiple target image resources in the picture-text content are switched and displayed based on a rhythm point of the background music.

17. The generation method of any of claims 1 to 16, wherein the text editing interface comprises a text editing detail interface, and the generating the target media content corresponding to the target control in response to the trigger operation on the media content generation interface comprises:
switching to the first posting interface in response to a trigger operation on the text editing detail interface; and
generating the target media content corresponding to the target control in response to a trigger operation on the first posting interface.

18. A media content display method, comprising:
displaying target media content in a media content display interface, wherein the target media content is generated by the media content generation method of any of claims 1 to 17.

19. The display method of claim 18, wherein the target media content comprises first-type content and second-type content, and the first-type content and the second-type content are configured with different playing modes when being displayed.

20. The display method of claim 19, wherein the target media content is the first-type content or picture-text content of the second-type content, and the displaying the target media content comprises:
displaying a target image resource in the target media content in the media content display interface; and
displaying other target image resources in the first-type content in the media content display interface in response to receiving a switching operation on the displayed target image resource.

21. A media content generation apparatus, comprising:
a first display module, which is configured to display an acquisition interface in response to receiving a creation operation of media content, wherein the acquisition interface is configured for acquiring at least one target image resource;
a second display module, which is configured to display one or more image resources and target controls on the acquisition interface, wherein the target controls comprise a first control and a second control;
a first switching module, which is configured to switch the acquisition interface to a media content generation interface corresponding to a target control in response to a trigger operation on the target control, wherein the media content generation interface comprises a text editing interface and an image editing interface, the first control corresponds to the text editing interface, and the second control corresponds to the image editing interface; and
a generation module, which is configured to generate target media content corresponding to the target control in response to a trigger operation on the media content generation interface.

22. A media content posting system, comprising:
the media content generation apparatus of claim 21; and
a display apparatus, which is configured to display, in a media content display interface, target media content generated by the generation apparatus.

23. An electronic device, comprising:
a memory; and
a processor coupled to the memory, wherein the processor is configured to, based on instructions stored in the memory, execute the media content generation method of any of claims 1 to 17 or the media content display method of any of claims 18 to 21.

24. A computer-readable storage medium, a computer program is stored on the computer-readable storage medium, and when the program is executed by a processor, the media content generation method of any of claims 1 to 17 or the media content display method of any of claims 18 to 21 is executed.

25. A computer program, comprising:
instructions that, when executed by a processor, cause the processor to execute the media content generation method of any of claims 1 to 17 or the media content display method of any of claims 18 to 21.
